# EUROPÄISCHE PATENTANMELDUNG

(11) **EP 4 793 062 A1**
(43) Veröffentlichungstag der Anmeldung: **19.08.2026**
(21) Anmeldenummer: 26154762.4
(22) Anmeldetag: 28.01.2026
(51) Int. Cl.: B60B 17/00, B60B 25/04, B60B 25/06, B60B 25/14

(54) **SPURKRANZSEKTOR**

(30) Priorität: 18.02.2025 AT 252025
(71) Anmelder: Hans Künz GmbH, 6971 Hard (Vbg.) (AT)
(72) Erfinder: Klapper, Georg, 6971 Hard (AT)
(74) Vertreter: Torggler & Hofmann Patentanwälte - Rankweil

(57) **Zusammenfassung**

Spurkranzsektor (1) für einen Spurkranz (3) für ein Laufrad (4) eines Schienenfahrzeugs (8), vorzugsweise ein Kranlaufrad, wobei der Spurkranzsektor (1) wenigstens eine Durchgangsöffnung (11) zur Befestigung des Spurkranzsektors (1) an dem Laufrad (4) aufweist, welche den Spurkranzsektor (1) in einer Richtung orthogonal zu einer radialen Richtung des Spurkranzsektors (1) vollständig durchdringt.

## Beschreibung

Die Erfindung betrifft einen Spurkranzsektor mit den Merkmalen des Oberbegriffs des Anspruchs 1, eine Anordnung mit einem Laufrad für ein Schienenfahrzeug und zumindest einem am Laufrad befestigten Spurkranz, sowie ein Verfahren zum Austausch eines Spurkranzes einer solchen Anordnung.

Laufräder für Schienenfahrzeuge, besonders bevorzugt Kranlaufräder, werden nach geometrischer Möglichkeit häufig als zylindrische Räder ausgeführt und die Seitenführung der Laufräder und damit auch der Fahrwerke durch beidseitig des Schienenkopfs befestigte Spurführungsrollen übernommen.

Um anderen Fahrzeugen das Überqueren der Schienen zu ermöglichen, müssen die Schienen für die Schienenfahrzeuge meistens bis zum Schienenkopf bzw. dessen Laufbahn bündig im Boden versenkt werden. Die dabei übrigbleibenden Spalten beidseitig neben dem Schienenkopf erweisen sich in diesem Fall jedoch als zu klein um Spurführungsrollen zu verwenden. Es muss daher auf Laufräder mit Spurkränzen ausgewichen werden.

Diese haben den Nachteil, dass sie bedingt durch den Schlupf bei Kontakt mit der Seite des Schienenkopfs relativ schnell verschleißen. Dadurch muss beim Stand der Technik häufig das gesamte Laufrad ausgewechselt werden, obwohl die Lauffläche des Laufrades an sich intakt ist und lediglich die Spurkränze verschlissen sind.

Um die Lebensdauer der Spurkränze zu erhöhen, werden diese deshalb häufig zusammen mit dem Laufrad gehärtet.

Bedingt durch die Anordnung der Spurkränze am Laufrad, kann jedoch der Härtungsprozess an den Innenkannten zwischen der Lauffläche und der Innenfläche der Spurkränze nur in geringe Tiefen eindringen, wodurch dieser Bereich erneut anfällig für Verschleiß ist.

Ein weiterer Nachteil besteht in dem aufwendigen und materialintensiven Herstellungsprozess von Laufrädern mit Spurkränzen gemäß dem Stand der Technik. Die Lauffläche der Laufräder wird dabei aus einem massiven Ring oder massiven Schmiedeteil herausgedreht. Einwandfreies Ausgangsmaterial geht dabei verloren und muss in Folge als Abfallprodukt wieder zerspant werden. Dies stellt auch aus ökologischer Sicht einen erheblichen Nachteil dar.

Die KR 101657780 B1 offenbart einstückige Spurkränze für ein Kranlaufrad, die jeweils an der Außenseite des Laufrades axial angeschraubt werden. Dabei sind die zwei getrennten Spurkränze seitenspezifisch aufgebaut und werden über ein Gewinde innerhalb des Laufradgrundkörpers mit diesem verbunden. Durch ein Gewinde innerhalb des Laufrades wird jedoch die Stabilität der Konstruktion vor allem bei einem schweren Kranbetrieb gefährdet.

Die KR 101543957 B1 offenbart einen einstückigen Spurkranz, der auch die Lauffläche des Laufrades mit umfasst und über den Laufradgrundkörper geschoben und anschließend axial, einseitig mit diesem verschraubt wird. Dadurch ergibt sich wiederum der Nachteil der Instabilität der Konstruktion durch ein Gewinde innerhalb des Laufradgrundkörpers. Zusätzlich besteht die Gefahr eines nicht formschlüssigen Übergangs zwischen Spurkranzelement und Laufradgrundkörper bedingt durch die fehlende radiale Befestigung bzw. fehlende axiale Befestigung auf der gegenüberliegenden Seite.

In der KR 20160066624 A wird ein Laufrad mit seitlichem Spurkranz offenbart, wobei der Spurkranz durch das Anbringen von jeweils zweiteiligen Verschleißelementen an der Innenseite verstärkt wird. Dadurch ergeben sich noch immer die bekannten Nachteile eines aufwendigen Herstellungsprozesses. Zudem ist durch die innenliegende Positionierung der Verschleißelemente ein Austausch dieser mit viel Aufwand verbunden. Des Weiteren sind die Verschleißelemente unter anderem aufgrund der geringen Dicke anfällig für Beschädigungen und das geringe Verschleißvolumen führt zu einem schnelleren Verschleiß, der ein häufigeres Austauschen der Verschleißelemente bewirkt.

Zusammengefasst ergeben sich im Stand der Technik demnach zumindest die folgenden Nachteile:
- Aufwendiger und materialintensiver Herstellungsprozess,
- geringe Lebensdauer des Laufrades durch schnellen Verschleiß der Spurkränze,
- ungleichmäßiger Härteprozess, und
- Instabilität des Laufrades durch ein Anbringen eines Gewindes innerhalb des Laufradgrundkörpers
- Hoher Aufwand zur Erneuerung des Laufrades bei verschlissenen Spurkränzen.

Es ist eine Aufgabe der Erfindung einen Spurkranzsektor für einen Spurkranz für ein Laufrad eines Schienenfahrzeugs bereitzustellen, bei welchem die oben genannten Nachteile zumindest teilweise beseitigt sind.

Diese Aufgabe wird durch einen Spurkranzsektor mit den Merkmalen des Anspruchs 1 gelöst.

Ein solcher Spurkranzsektor weist wenigstens eine Durchgangsöffnung zur Befestigung des Spurkranzsektors an dem Laufrad auf, welche den Spurkranzsektor in einer Richtung orthogonal zu einer radialen Richtung des Spurkranzsektors vollständig durchdringt.

Vorteilhaft an einem derartigen Spurkranzsektor ist die Möglichkeit einen defekten oder verschlissenen Spurkranzsektor, während das Laufrad des Schienenfahrzeugs auf der Schiene steht, auszutauschen, womit der Aufwand zur Erneuerung eines Laufrades mit verschlissenen Spurkränzen gegenüber dem Stand der Technik deutlich reduziert wird. Somit wird auch die Lebensdauer des gesamten Laufrades erhöht und viel Material gespart, da das Laufrad an sich viel länger verwendet werden kann. Auch die Härtung des Laufrades bzw. seiner Lauffläche wird deutlich vereinfacht und auch qualitätsmäßig verbessert, da das Laufrad bzw. dessen Lauffläche ohne die Spurkränze gehärtet werden kann.

Die Verwendung zumindest eines Spurkranzsektors hat zudem den Vorteil, dass der Herstellungsprozess vereinfacht und materialsparender gestaltet werden kann, da der Spurkranz unabhängig vom restlichen Laufrad produziert und auch gehärtet werden kann.

Der Härteprozess wird insbesondere dadurch verbessert, dass eine gleichmäßige Tiefe der Härtung im gesamten Bereich des Spurkranzsektors aber auch der Lauffläche und auch der Innenkannte zwischen Innenseite des Spurkranzsektor und Lauffläche erreicht wird.

Durch die Option den Spurkranzsektor selbst bereits aus einem harten Grundwerkstoff zu fertigen, kann zudem in diesem Fall auch eine nachfolgende Wärmebehandlung des Spurkranzsektors zum Härten entfallen.

Vorteilhafte Ausführungsformen der Erfindung sind in den abhängigen Ansprüchen angegeben.

In einer bevorzugten Ausführungsform weist der Spurkranzsektor in einer Seitenansicht die Form eines Kreisringsektors auf.

Ein Kreisringsektor ist dabei definiert als die Teilfläche eines Kreisringes, die von einem inneren und einem äußeren Kreisbogen, sowie durch zwei seitliche Ränder begrenzt wird.

Der Winkel der zwischen den beiden seitlichen Rändern eingeschlossen wird, wird im Allgemeinen als Mittelpunktswinkel oder auch Zentriwinkel bezeichnet und kann Werte zwischen 0° und 360° annehmen.

In einer bevorzugten Ausführungsform erstreckt sich der Spurkranzsektor über einen Mittelpunktswinkel von maximal 180°, bevorzugt von maximal 90°.

Die Form des Spurkranzsektors bei einem Mittelpunktswinkel von 180° kann in etwa mit der Form eines entlang einer Mittelebene in zwei gleich große Teile geteilten Rings verglichen werden.

Gemäß einer bevorzugten Ausführungsform weist der Spurkranzsektor wenigstens zwei, besonders bevorzugt mehr als drei, Durchgangsöffnungen auf.

Bevorzugt sind die Mittelpunkte der Durchgangsöffnungen entlang eines imaginären Kreisbogens angeordnet.

Bevorzugt haben zwei zueinander benachbarte Durchgangsöffnungen jeweils denselben Abstand zueinander.

Durch einen gleichmäßigen Abstand der Durchgangsöffnungen zueinander innerhalb eines einzigen Spurkranzsektors wird sowohl die Stabilität des Spurkranzsektors selbst erhöht, da eine gleichmäßige Kraftverteilung innerhalb des Spurkranzsektors erzielt wird, als auch die Qualität der Befestigung am Laufrad erhöht. Durch die Befestigung am Laufrad in gleichmäßigen Abständen kann ein einseitiges Abheben des Spurkranzsektors vom Laufrad bei Belastung besonders gut verhindert werden.

In bevorzugten Ausführungsformen ist der Spurkranzsektor in radialer Richtung durch einen inneren Rand und einen äußeren Rand begrenzt und die wenigstens eine Durchgangsöffnung ist näher am inneren Rand als am äußeren Rand des Spurkranzsektors angeordnet. Bevorzugt gilt dies für alle Durchgangsöffnungen im Spurkranzsektor.

Dadurch wird erreicht, dass der Bereich des Spurkranzsektors, der dem Führen des Laufrades dient, nicht durch Durchgangsöffnungen in seiner Stabilität beeinträchtigt wird.

Auch für den Fall, dass das Ausgangsmaterial des Spurkranzsektors erst später gehärtet wird, kann so verhindert werden, dass es durch die Durchgangsöffnungen zu kritischen Spannungen im Material in den für die Funktion essenziellen Bereichen des Spurkranzes kommt.

In bevorzugten Ausführungsformen ist die wenigstens eine randlich angeordnete Durchgangsöffnung näher an einem seitlichen Rand des Spurkranzsektors angeordnet als an der dazu benachbarten Durchgangsöffnung.

Besonders bevorzugt beträgt ein Abstand der randlich angeordneten Durchgangsöffnung zum seitlichen Rand des Spurkranzsektors höchstens die Hälfte eines Abstandes der randlich angeordneten Durchgangsöffnung zur benachbarten Durchgangsöffnung.

Durch diese Anordnung der Durchgangsöffnungen wird auch im Übergangsbereich zwischen zwei benachbarten Spurkranzsektoren eine besonders stabile und formschlüssige Verbindung zum Laufrad ermöglicht.

Gemäß einer weiteren Ausführungsform weist die wenigstens eine Durchgangsöffnung ein Gewinde auf.

Durch das Anbringen eines Gewindes innerhalb der wenigstens einen Durchgangsöffnung des Spurkranzsektors, greifen die Befestigungsmittel im Gewinde des Spurkranzes ein und bilden dort einen Formschluss. Spannungen im Material des Laufrads durch das Anbringen eines Gewindes in demselbigen und/oder Spannungen innerhalb des Laufrades durch den Formschluss mit den Befestigungsmitteln bei Belastung werden somit verhindert.

Zudem ist das Gewinde an sich anfälliger für Defekte und Verschleiß. Bei einer Anordnung des Gewindes an einem auswechselbaren Spurkranz und damit nicht am Laufrad kann somit die Lebensdauer des Laufrades erheblich erhöht werden.

Zusätzlich kann vorgesehen sein, dass ein Ende der zumindest einen Durchgangsöffnung des Spurkranzsektors in eine Vertiefung im Spurkranzsektor mündet.

Diese Vertiefung kann beispielsweise in Form einer Ausfräsung realisiert sein und dient dazu, dass die Befestigungsmittel im Montagezustand nicht oder zumindest weniger vom Spurkranzsektor nach außen abstehen. Einer Beschädigung eines Teils der Befestigungsmittel durch Stöße, Schleifen oder sonstige mechanische Krafteinwirkung kann somit vorgebeugt werden.

Zudem wird die Sicherheit für einen Bediener und/oder Außenstehenden erhöht, da in Ermangelung abstehendender Bestandteile am Laufrad durch Versenkung ebendieser in den Vertiefungen das Verletzungsrisiko minimiert wird.

Es ist besonders bevorzugt vorgesehen, dass der Spurkranzsektor aus Metall gefertigt ist, wobei der Spurkranzsektor zumindest an einer seiner Oberflächen eine Brinellhärte von wenigstens 400, bevorzugt wenigstens 500, aufweist.

Die Brinellhärteskala (HBW) ist dabei in der Norm EN ISO 6506-1:2014 normiert.

In einer Ausführungsform ist vorgesehen, dass der Spurkranzsektor wenigstens eine Anlageschulter zur, bevorzugt formschlüssigen, Anlage an einer Lauffläche des Laufrades aufweist.

Durch die Anlageschulter wird ein Überlapp mit der Lauffläche des Laufrades realisiert. Dieser Überlapp hat zum einen den Vorteil, dass Spalten in einem Übergangsbereich zwischen der Innenfläche des Spurkranzsektors und der Lauffläche, d.h. der Innenkante, vermieden werden und ein formschlüssiger Übergang bereitgestellt wird.

Zum anderen kann durch den Überlapp eine erhöhte Härtetiefe in diesem Bereich erzielt werden.

Des Weiteren wird Schutz begehrt für eine Anordnung mit einem Laufrad für ein Schienenfahrzeug, vorzugsweise Kranlaufrad, und zumindest einem am Laufrad befestigten Spurkranz, wobei der Spurkranz aus zumindest zwei erfindungsgemäßen Spurkranzsektoren ausgebildet ist.

In einer bevorzugten Ausführungsform der Anordnung weist das Laufrad wenigstens eine Befestigungsöffnung zur Befestigung wenigstens eines der Spurkranzsektoren an dem Laufrad, auf.

Bevorzugt ist dabei eine Längsrichtung der wenigstens einen Befestigungsöffnung parallel zu einer Lauffläche des Laufrades und/oder einer Drehachse des Laufrades angeordnet.

In einer weiteren Ausführungsform der Anordnung durchdringt die wenigstens eine Befestigungsöffnung das Laufrad in einer axialen Richtung parallel zu einer bzw. der Drehachse des Laufrades vollständig. Hierdurch kann ein einziges Befestigungsmittel wie z.B. eine Schraube dazu verwendet werden, zwei Spurkranzsektoren auf einander gegenüberliegenden Seiten am Laufrad zu befestigen.

Dies hat mehrere Vorteile:
- Zum einen wird dadurch die Gesamtanzahl der Befestigungsöffnungen am Laufrad reduziert, was vor allem bei einem späteren Härteprozess für mehr Stabilität durch geringere Materialspannungen sorgt,
- Es werden zudem insgesamt weniger Befestigungsmittel benötigt, und
- Die Spurkranzsektoren an einander gegenüberliegenden Seiten des Laufrades sind spiegelsymmetrisch zueinander anordenbar.

Gemäß einer Ausführungsform der Anordnung kann vorgesehen sein, dass die wenigstens eine Befestigungsöffnung wenigstens bereichsweise ein Gewinde aufweist.

Dadurch wird ermöglicht, dass bei einander spiegelsymmetrisch gegenüberliegenden Spurkranzsektoren im Falle eines Auswechselns eines der Spurkranzsektoren der andere auch während des Austauschens fest mit dem Laufrad verbunden bleibt.

Bevorzugt sind wenigstens zwei Befestigungsöffnungen zur Befestigung wenigstens einen der Spurkranzsektoren vorgesehen.

In einer bevorzugten Ausführungsform der Anordnung sind Mittelpunkte der Befestigungsöffnungen entlang eines imaginären Kreisbogens angeordnet und/oder zwei zueinander benachbarte Befestigungsöffnungen haben jeweils denselben Abstand zueinander.

Als besonders vorteilhaft hat sich dabei ein Abstand zwischen zwei benachbarten Befestigungsöffnungen in einem Übergangsbereich zwischen zwei benachbarten Spurkranzsektoren erwiesen, der kleiner ist als der Abstand der Befestigungsöffnung zu einer anderen benachbarten Befestigungsöffnung.

In einer weiteren Ausführungsform der Anordnung sind wenigstens zwei Befestigungsöffnungen einander gegenübergestellt an dem Laufrad, bevorzugt in einer gemeinsamen Ebene parallel zur Längsrichtung der Befestigungsöffnungen, angeordnet.

Dadurch wird analog zu einer das Laufrad vollständig durchdringenden Befestigungsöffnung ermöglicht, dass zwei Spurkranzsektoren an einander gegenüberliegenden Seiten des Laufrades spiegelsymmetrisch zueinander anordenbar sind.

Besonders bevorzugt ist zusätzlich wenigstens ein Befestigungsmittel vorgesehen, wobei mit dem wenigstens einem Befestigungsmittel der wenigstens eine Spurkranzsektor über die wenigstens eine Durchgangsöffnung des Spurkranzsektors und die wenigstens eine Befestigungsöffnung des Laufrades an dem Laufrad lösbar befestigbar oder befestigt ist.

Als Befestigungsmittel kommen theoretisch alle bekannten Arten in Frage. Als Beispiel können hierbei Schrauben mit oder ohne Mutter, Nieten, aber auch Schweißnähte etc. angeführt werden.

In einem bevorzugten Ausführungsbeispiel der Anordnung ist das wenigstens eine Befestigungsmittel in Form einer Schraube ausgebildet, und die wenigstens eine Schraube bildet bevorzugt mit einem Gewinde in der wenigstens einen Durchgangsöffnung des wenigstens einen Spurkranzsektors und/oder mit einem Gewinde in der wenigstens einen Befestigungsöffnung des Laufrades und/oder mit wenigstens einer Mutter einen Formschluss.

Bevorzugt kommen dabei Schrauben der Festigkeitsklasse von mindestens 10.9 zum Einsatz.

Besonders bevorzugt ist vorgesehen, dass eine bzw. die Lauffläche des Laufrades aus, vorzugsweise gehärtetem, Metall, vorzugsweise Stahl, gefertigt ist und/oder das Laufrad einstückig ausgebildet ist.

Gemäß einer weiteren Ausführungsform der Anordnung ist eine bzw. die Lauffläche des Laufrades kreiszylindermantelförmig ausgebildet.

Dies hat sich vor allem im Kranbau als vorteilhaft herausgestellt, da es im Kranbau zu höheren Pressungen kommt, Laufräder meist nicht gekoppelt sind, im Kranbau meist ein Einzelantrieb Verwendung findet und im Schnitt die Geschwindigkeiten derartiger Schienenfahrzeuge geringer sind.

Alternativ kann die Lauffläche des Laufrades auch konkav ausgeführt sein.

Besonders bevorzugt weist zudem der Spurkranzsektor wenigstens eine Anlageschulter auf, wobei die wenigstens eine Anlageschulter eine bzw. die Lauffläche des Laufrades zumindest bereichsmäßig überlappt.

Schutz wird des Weiteren begehrt für ein Verfahren zum Austausch des Spurkranzes einer erfindungsgemäßen Anordnung.

Gemäß einem solchen Verfahren wird zumindest einer der den Spurkranz bildenden Spurkranzsektoren vom Laufrad abgenommen und durch zumindest einen neuen Spurkranzsektor ersetzt, bevor zumindest ein anderer der den Spurkranz bildenden Spurkranzsektoren vom Laufrad abgenommen und durch zumindest einen anderen neuen Spurkranzsektor ersetzt wird.

In einer bevorzugten Ausführungsform des Verfahrens ist das Laufrad während des Abnehmens der Spurkranzsektoren vom Laufrad und dem Ersetzen durch die neuen Spurkranzsektoren auf einer Schiene gelagert.

Durch den Austausch, während das Laufrad mit seiner Lauffläche auf der Schiene steht, wird erreicht, dass der

Austausch eines Spurkranzes schnell und mit wenig Aufwand erfolgen kann und das Schienenfahrzeug schnell wieder einsatzfähig ist.

Bevorzugt wird das Laufrad nach dem Ersetzen eines Spurkranzsektors durch den neuen Spurkranzsektor und vor dem Abnehmen des anderen Spurkranzsektors gedreht.

In einer weiteren bevorzugten Ausführungsform des Verfahrens sind das Laufrad und der Spurkranz bereichsweise von einem Laufradgehäuse umgeben und das Laufrad wird zum Abnehmen und Ersetzen des jeweiligen Spurkranzsektors so gedreht, dass der jeweils abzunehmende und zu ersetzende Spurkranzsektor in einem Bereich außerhalb des Laufradgehäuses positioniert wird.

Weitere Einzelheiten und Vorteile bevorzugter Ausgestaltungsformen der Erfindung werden anhand der Figurenbeschreibung unter Bezugnahme auf die Zeichnungen im Folgenden näher erläutert. Darin zeigen:
- Fig. 1A:: Seitenansicht eines Laufrades mit Spurkranz gemäß dem Stand der Technik;
- Fig. 1B:: Querschnitt entlang der Schnittebene A des Laufrades gemäß Fig. 1A;
- Fig. 2A:: Seitenansicht auf eine erste erfindungsgemäße Anordnung mit Laufrad und daran befestigten Spurkränzen, die auf einer Schiene gelagert ist;
- Fig. 2B:: Querschnitt entlang der Schnittebene B der Anordnung gemäß Fig. 2A;
- Fig. 3A:: Seitenansicht auf eine zweite erfindungsgemäße Anordnung mit Laufrad und einem daran befestigten Spurkranz, die auf einer Schiene gelagert ist;
- Fig. 3B:: Querschnitt entlang der Schnittebene C der Anordnung gemäß Fig. 3A;
- Fig. 4A:: Seitenansicht auf eine dritte erfindungsgemäße Anordnung mit Laufrad und einem daran mit Muttern befestigten Spurkranz, die auf einer Schiene gelagert ist;
- Fig. 4B:: Querschnitt entlang der Schnittebene D der Anordnung gemäß Fig. 4A;
- Fig. 5A:: Seitenansicht auf eine vierte erfindungsgemäße Anordnung mit Laufrad und einem daran befestigten Spurkranz, die auf einer Schiene gelagert ist;
- Fig. 5B:: Querschnitt entlang der Schnittebene E der Anordnung 2 gemäß Fig. 5A;
- Fig. 6A:: Seitenansicht auf eine fünfte erfindungsgemäße Anordnung mit Laufrad und einem einseitig daran befestigten Spurkranz, die auf einer Schiene gelagert ist;
- Fig. 6B:: Querschnitt entlang der Schnittebene F der Anordnung 2 gemäß Fig. 6A;
- Fig. 7A:: Seitenansicht auf eine sechste erfindungsgemäße Anordnung mit Laufrad und einem einseitig daran befestigten Spurkranz, die auf einer Schiene gelagert ist;
- Fig. 7B:: Querschnitt entlang der Schnittebene G der Anordnung gemäß Fig. 7A;
- Fig. 8A:: Seitenansicht auf eine siebte erfindungsgemäße Anordnung mit Laufrad und einem daran befestigten Spurkranz, die auf einer Schiene gelagert ist;
- Fig. 8B:: Querschnitt entlang der Schnittebene H der Anordnung 2 gemäß Fig. 8A;
- Fig. 9A:: Seitenansicht auf eine achte erfindungsgemäße Anordnung mit Laufrad und einem einseitig daran befestigten Spurkranz, die auf einer Schiene gelagert ist;
- Fig. 9B:: Querschnitt entlang der Schnittebene I der Anordnung gemäß Fig. 9A;
- Fig. 10A:: Seitenansicht auf eine Anordnung mit Laufrad und Spurkranz, die bereichsweise von einem Laufradgehäuse umgeben und auf einer Schiene gelagert ist;
- Fig. 10B:: Frontalansicht der Anordnung mit Laufradgehäuse gemäß der Fig. 10A;
- Fig. 11:: Axonometrische Darstellung der Anordnung mit Laufradgehäuse gemäß der Fig. 10A;
- Fig. 12A:: Axonometrische Darstellung einer Ausführungsvariante mit zwei Spurkranzsektoren auf jeder der beiden, zur Lauffläche benachbarten Seitenflächen des Laufrades;
- Fig. 12B:: Ansicht eines Spurkranzsektors mit einem Mittelpunktswinkel von 180°;
- Fig. 12C:: Ansicht eines Spurkranzsektors mit einem Mittelpunktswinkel von 180°, wobei die im Montagezustand an dem Laufrad anliegende Seitenfläche des Spurkranzsektors sichtbar ist;
- Fig. 13A:: Axonometrische Darstellung einer Ausführungsvariante mit drei Spurkranzsektoren auf jeder der beiden, zur Lauffläche benachbarten Seitenflächen des Laufrades;
- Fig. 13B:: Ansicht eines Spurkranzsektors mit einem Mittelpunktswinkel von 120°;
- Fig. 13C:: Ansicht eines Spurkranzsektors mit einem Mittelpunktswinkel von 120°, wobei die im Montagezustand an dem Laufrad anliegende Seitenfläche des Spurkranzsektors sichtbar ist;
- Fig. 14A:: Axonometrische Darstellung einer Ausführungsvariante mit vier Spurkranzsektoren auf jeder der beiden, zur Lauffläche benachbarten Seitenflächen des Laufrades;
- Fig. 14B:: Ansicht eines Spurkranzsektors mit einem Mittelpunktswinkel von 90°;
- Fig. 14C:: Ansicht eines Spurkranzsektors mit einem Mittelpunktswinkel von 90°, wobei die im Montagezustand an dem Laufrad anliegende Seitenfläche des Spurkranzsektors sichtbar ist;
- Fig. 15A:: Axonometrische Darstellung einer Ausführungsvariante mit fünf Spurkranzsektoren auf jeder der beiden, zur Lauffläche benachbarten Seitenflächen des Laufrades;
- Fig. 15B:: Ansicht eines Spurkranzsektors mit einem Mittelpunktswinkel von 72°;
- Fig. 15C:: Ansicht eines Spurkranzsektors mit einem Mittelpunktswinkel von 72°, wobei die im Montagezustand an dem Laufrad anliegende Seitenfläche des Spurkranzsektors sichtbar ist;
- Fig. 16A:: Axonometrische Darstellung einer Ausführungsvariante mit sechs Spurkranzsektoren auf jeder der beiden, zur Lauffläche benachbarten Seitenflächen des Laufrades;
- Fig. 16B:: Ansicht eines Spurkranzsektors mit einem Mittelpunktswinkel von 60°;
- Fig. 16C:: Ansicht eines Spurkranzsektors mit einem Mittelpunktswinkel von 60°, wobei die im Montagezustand an dem Laufrad anliegende Seitenfläche des Spurkranzsektors sichtbar ist;
- Fig. 17A:: Axonometrische Darstellung einer Ausführungsvariante mit sechs Spurkranzsektoren auf jeder der beiden, zur Lauffläche benachbarten Seitenflächen des Laufrades, wobei zwei Arten von Spurkranzsektoren mit jeweils unterschiedlichen Mittelpunktswinkeln verwendet werden;
- Fig. 17B:: Ansicht eines Spurkranzsektors gemäß Fig. 17A mit einem ersten Mittelpunktswinkel;
- Fig. 17C:: Ansicht eines Spurkranzsektors mit einem ersten Mittelpunktswinkel gemäß der Fig. 17B, wobei die im Montagezustand an dem Laufrad anliegende Seitenfläche des Spurkranzsektors sichtbar ist;
- Fig. 17D:: Ansicht eines Spurkranzsektors gemäß Fig. 17A mit einem zweiten, vom ersten Mittelpunktswinkel gemäß Fig. 17B und 17C verschiedenen Mittelpunktswinkel;
- Fig. 17E:: Ansicht eines Spurkranzsektors mit einem zweiten Mittelpunktswinkel gemäß der Fig. 17D, wobei die im Montagezustand an dem Laufrad anliegende Seitenfläche des Spurkranzsektors sichtbar ist;
- Fig. 18:: Draufsicht auf ein auf zwei Schienen gelagertes Schienenfahrzeug in Form eines Portalkrans bei dem die Erfindung eingesetzt werden kann.

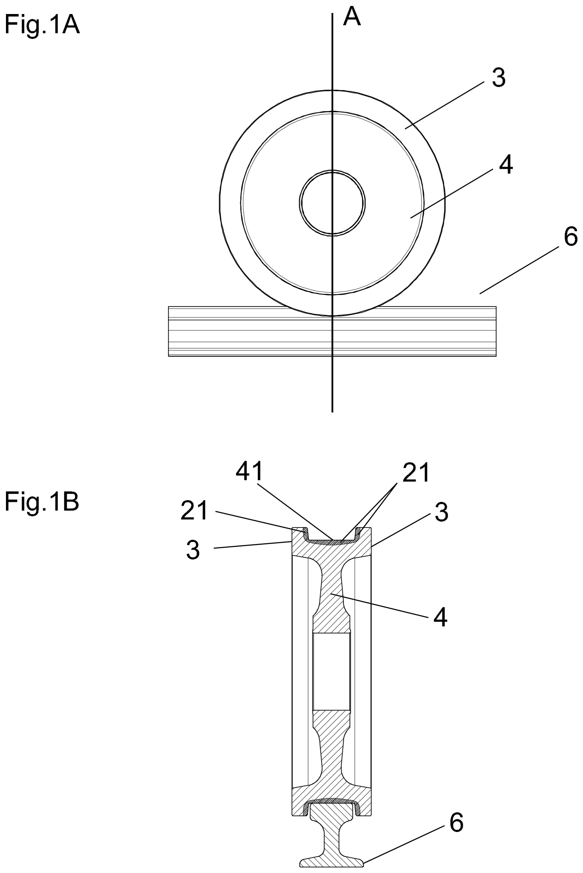

In Fig. 1A ist die Seitenansicht eines Laufrades 4 mit Spurkränzen 3 gemäß dem Stand der Technik gezeigt und die Schnittebene A eingezeichnet, entlang derer die Querschnittsdarstellung der Fig. 1B erfolgt. Man sieht insbesondere in Fig. 1B, dass die Spurkränze 3 einstückig am Laufrad 4 angeformt sind und der gehärtete Bereich bzw. Härtebereich 21 sich sowohl über die Lauffläche 41 des Laufrads 4 als auch über die Innenseiten der Spurkränze 3 erstreckt. Hieraus ergeben sich die eingangs bereits diskutierten Nachteile des Standes der Technik in Form des aufwendigen und materialintensiven Herstellungsprozesses und der geringen Lebensdauer des Laufrades 4 durch schnellen Verschleiß der Spurkränze 3. Darüber ergibt sich vor allem in den besonders beanspruchten Übergangsbereichen zwischen den Spurkränzen 3 und der Lauffläche 41 bzw. dem Laufrad 4 ein ungleichmäßiger Härteprozess.

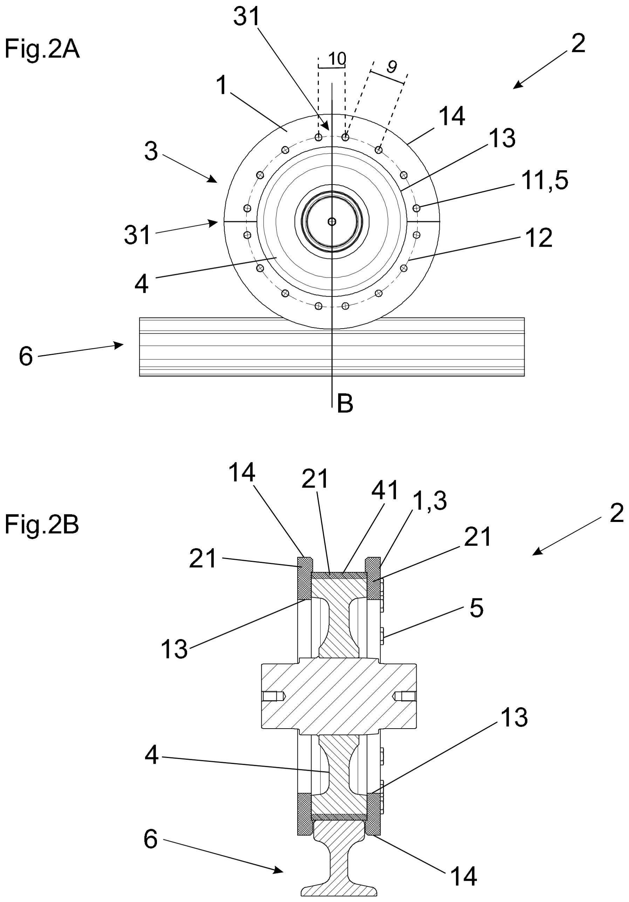

Die Figuren 2A, 3A, 4A, 5A, 6A, 7A, 8A und 9A zeigen jeweils eine Seitenansicht auf eine erfindungsgemäße Anordnung 2 mit Laufrad 4 und einem daran befestigten Spurkranz 3, die auf einer Schiene 6 gelagert ist.

Der Spurkranz 3 setzt sich in diesen Ausführungsbeispielen aus vier Spurkranzsektoren 1 zusammen, die über Durchgangsöffnungen 11, welche den Spurkranzsektor 1 in einer Richtung orthogonal zu einer radialen Richtung des Spurkranzsektors 1 vollständig durchdringen, mittels Befestigungsmittel 5 an dem Laufrad 4 befestigt sind.

Jeder Spurkranzsektor 1 weist in diesen Varianten dabei jeweils vier Durchgangsbohrungen 11 zur Befestigung des Spurkranzsektors 1 an dem Laufrad 4 auf.

Der Spurkranzsektor 1 ist in radialer Richtung durch einen inneren Rand 13 und einen äußeren Rand 14 begrenzt.

Die Mittelpunkte der Durchgangsöffnungen 11 sind entlang eines imaginären Kreisbogens 12 angeordnet, wobei die Durchgangsöffnungen 11 näher am inneren Rand 13 als am äußeren Rand 14 des Spurkranzsektors 1 angeordnet sind.

Während zwei zueinander benachbarte Durchgangsöffnungen 11 ein und desselben Spurkranzsektors 1 jeweils denselben Abstand 9 zueinander haben, ist der Abstand 10 zwischen zwei benachbarten Durchgangsöffnungen 11 in einem Übergangsbereich 31 zwischen zwei benachbarten Spurkranzsektoren 1 kleiner.

Dadurch gewinnt der Spurkranz 3 an Stabilität in dem Übergangsbereich 31, indem die Wahrscheinlichkeit für Translationen und/oder Verbiegungen der benachbarten Spurkranzsektoren 1 bedingt durch die materiallose Fuge verringert wird.

Auch die Lebensdauer der Befestigungsmittel 5, wie z.B. Schrauben, wird erhöht, da die Hebelwirkung einer Seitenkraft auf das Befestigungsmittel 5 verringert wird.

Ein durchgehend gleichmäßiger Abstand zwischen den Durchgangsöffnungen 11 wäre aber auch ausführbar.

Die Spurkranzsektoren 1 sind bevorzugt aus Metall gefertigt und weisen besonders bevorzugt zumindest an einer ihrer Oberflächen, bevorzugt der zur Schiene 6 weisenden Oberfläche, eine Brinellhärte von wenigstens 400, bevorzugt wenigstens 500, auf.

Die Laufflächen 41 der Laufräder 4 sind bevorzugt aus gehärtetem Metall, besonders bevorzugt gehärteten Stahl, gefertigt.

In Fig. 2B ist exemplarisch für die nachfolgenden erfindungsgemäßen Varianten dargestellt, dass die Tiefe der Härtung bzw. des Härtebereichs 21 gleichmäßig über die gesamte Lauffläche 41 des Laufrades 4, sowie gleichmäßig über die gesamte Dicke des jeweiligen Spurkranzes 3 verläuft. Im Gegensatz dazu ist der Härtebereich 21 bei einem Laufrad 4 gemäß dem Stand der Technik, wie in Figur 1B dargestellt, nicht nur ungleichmäßiger sondern auch dünner. Vor allem die Innenkanten an einem Übergang zwischen einer Seitenfläche des Spurkranzes 3 und der Lauffläche 41 weisen beim Stand der Technik lediglich eine geringe Eindringtiefe der Härtung und damit des Härtebereichs 21 auf, siehe ebenfalls Fig. 1B, und sind somit anfällig für Verschleiß.

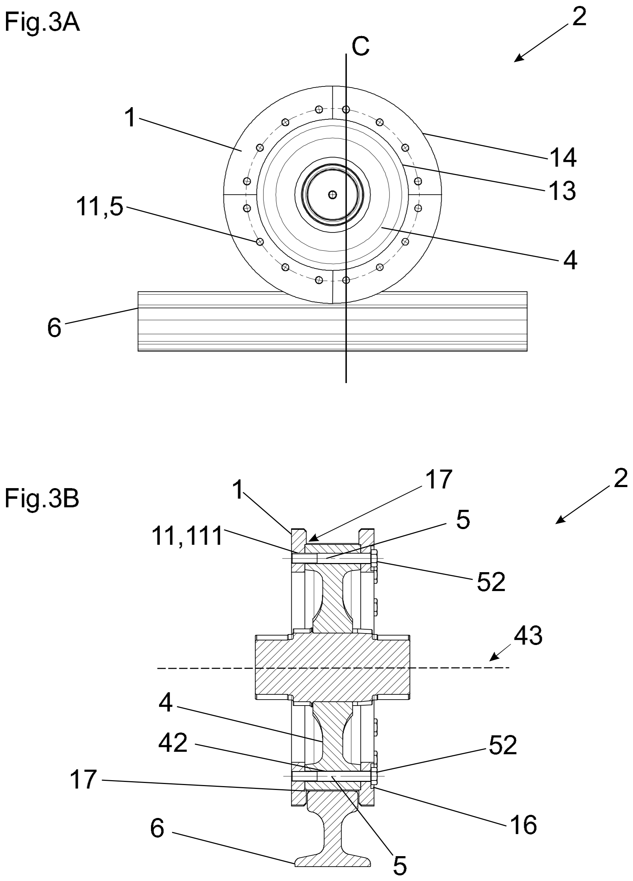

Die Fig. 3B zeigt einen Querschnitt entlang der Schnittebene C der Anordnung 2 gemäß Fig. 3A.Das Laufrad 4 weist Befestigungsöffnungen 42 zur Befestigung der Spurkranzsektoren 1 an dem Laufrad 4 auf. Die Längsrichtungen der Befestigungsöffnungen 42 sind dabei parallel zu der Lauffläche 41 des Laufrades 4 und hier auch der Drehachse 43 des Laufrades 4 angeordnet. In der Variante gemäß Fig. 3B durchdringen die Befestigungsöffnungen 42 das Laufrad 4 in einer axialen Richtung parallel zu der Drehachse 43 des Laufrades 4 vollständig. Die Längsrichtungen der Befestigungsöffnungen 42 verlaufen somit auch parallel zur Lauffläche 41 des Laufrades 4.

Der Abstand der Befestigungsöffnungen 42 korrespondiert dabei mit dem Abstand der Durchgangsöffnungen 11 der den Spurkranz 3 bildenden Spurkranzsektoren 1.

Mittels der, durch die jeweiligen Durchgangsöffnungen 11 und die jeweilige Befestigungsöffnung 42 hindurchgeführten, Befestigungsmittel 5 werden die Spurkranzsektoren 1 an dem Laufrad 4 lösbar befestigt. Bei den Befestigungsmitteln in der Fig. 3B handelt es sich jeweils um eine Schraube, die mit einem Gewinde 111 in jeweils eine Durchgangsöffnung 11 eines Spurkranzsektors 1 eingeschraubt ist. In der Variante der Fig. 3A und 3B befestigt jede Schraube mit ihrem Kopf 52 einen ersten Spurkranzsektor 1 auf der einen Seite des Laufrades 4 und mit ihrem Gewinde 111 einen zweiten Spurkranzsektor 1 auf der dazu gegenüberliegenden Seite des Laufrades 4.Bei den in diesem Beispiel vollständig durchgehenden Befestigungsöffnungen 42 ist die Klemmlänge besonders hoch und folglich die dynamische Belastung der Schraube bzw. anderer äquivalenter Befestigungsmittel 5 besonders gering.

Unter Klemmlänge wird im Allgemeinen die Dicke der zu verbindenden Elemente einschließlich gegebenenfalls genutzter Unterlegscheiben verstanden. Bei Schraubverbindungen ist dies der Abstand zwischen der Schrauben-Auflagefläche bis zur Mutter bzw. Gewindebohrung und bei Nietverbindungen der Abstand zwischen den Auflageflächen der Nietköpfe.

Auf der rechten Seite der Fig. 3B münden die die Durchgangsöffnungen 11 der Spurkranzsektoren 1 jeweils in eine Vertiefung 16 im jeweiligen Spurkranzsektor 1.

Dadurch kann zumindest ein Teil des Befestigungsmittels, hier der Kopf 52, zumindest teilweise versenkt angebracht werden, wodurch nicht nur das Laufrad selbst schmaler ausgestaltet werden kann, sondern auch die Verletzungsgefahr für einen Bediener durch abstehende Bauteile verringert wird.

Des Weiteren ist in Fig. 3B wenigstens eine Anlageschulter 17 des jeweiligen Spurkranzsektors 1 zur, bevorzugt formschlüssigen, Anlage an der Lauffläche 41 des Laufrades 4, erkennbar, wobei die Anlageschulter 17 jeweils die Lauffläche 41 des Laufrades 4 zumindest bereichsmäßig überlappt.

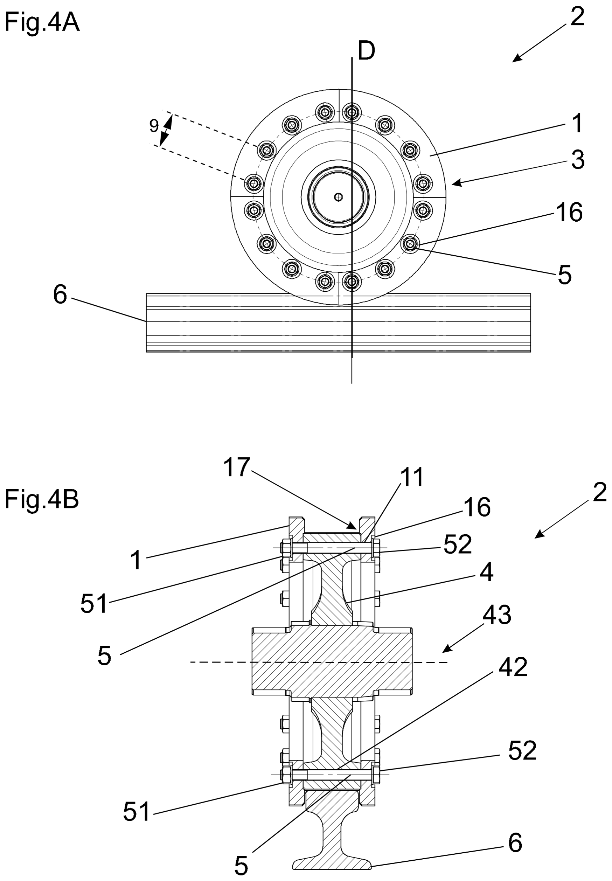

In den Fig. 4A und 4B wird ein Ausführungsbeispiel einer erfindungsgemäßen Anordnung 2 gezeigt, bei dem die Befestigungsmittel 5 im Gegensatz zum Ausführungsbeispiel der Fig. 3A und 3B als Schraube-Mutter-Verbindung realisiert sind. Die Variante mit der Mutter 51 anstelle eines Gewindes 111 in der Durchgangsöffnung 11 eines der Spurkranzsektoren 1 ist etwas kostengünstiger realisierbar, baut aber im Profil des Laufrades 4 breiter auf.

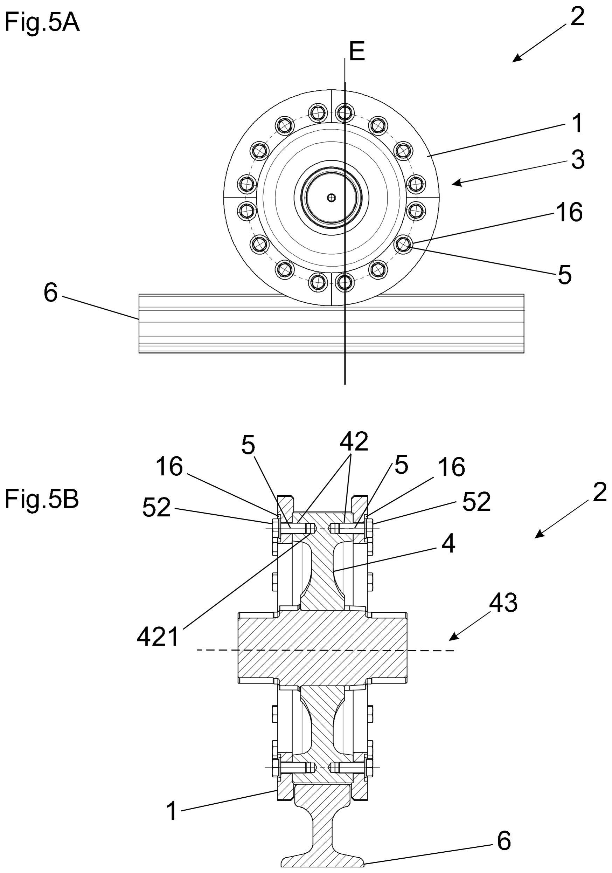

Die Fig. 5B zeigt einen Querschnitt entlang der Schnittebene E der Anordnung 2 gemäß Fig. 5A.In dieser ebenfalls erfindungsgemäßen Variante sind jeweils zwei, als Sackloch ausgebildete Befestigungsöffnungen 42 koaxial und voneinander getrennt aber vorzugsweise einander gegenübergestellt in dem Laufrad 4 ausgebildet und jeweils zumindest bereichsweise mit einem Gewinde 421 versehen.

Auch hier in der Variante gemäß der Fig. 5B sind die Befestigungsmittel 5 jeweils in Form einer Schraube ausgebildet, wobei die jeweilige Schraube in ein Gewinde 421 in der jeweiligen Befestigungsöffnung 42 des Laufrades 4 eingeschraubt ist.

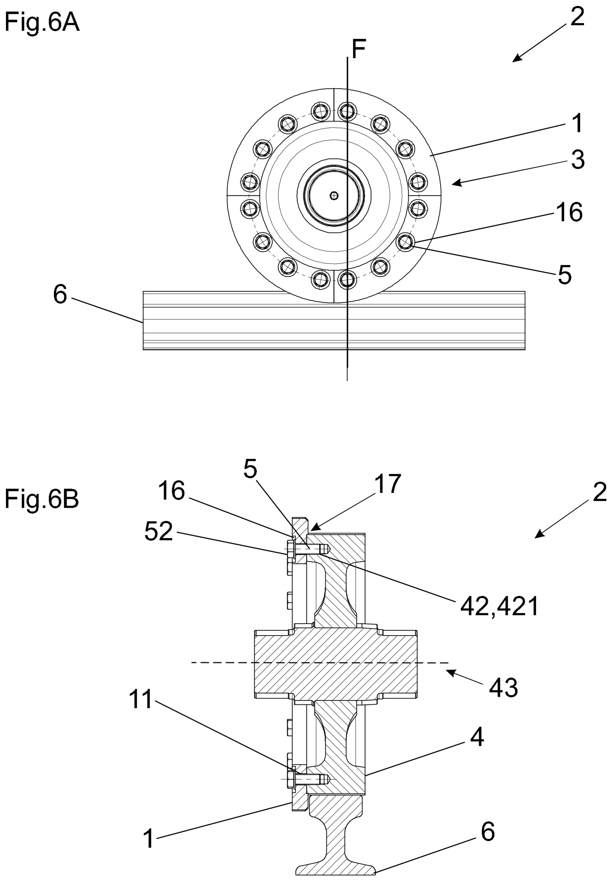

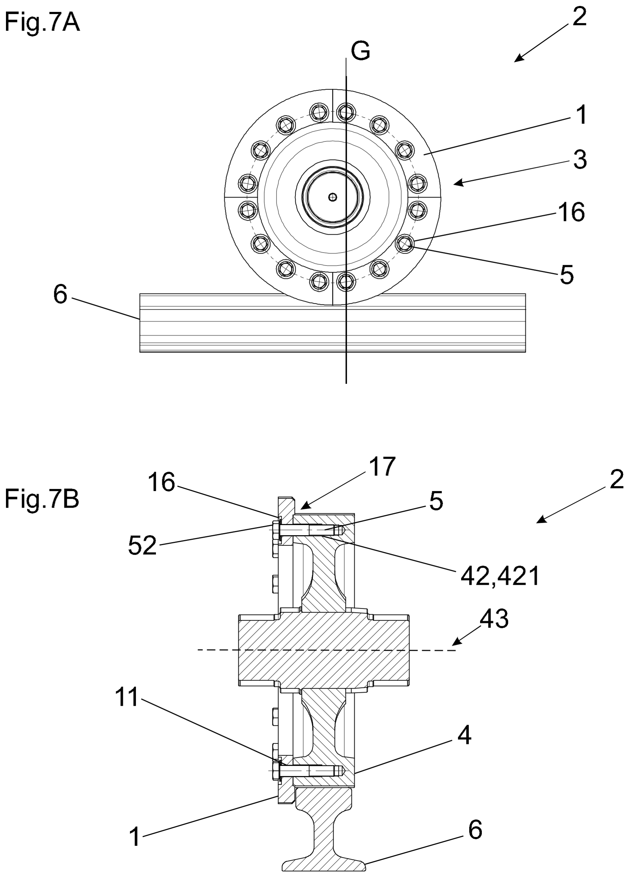

Die Fig. 6A, 6B, 7A und 7B zeigen jeweils eine ebenfalls erfindungsgemäße Anordnung 2 mit einem Laufrad 4, bei der allerdings jeweils nur auf einer Seite ein Spurkranz 3 am Laufrad 4 befestigt ist. Fig. 6B zeigt einen Schnitt entlang der Schnittebene F aus Fig. 6A und Fig. 7B einen Schnitt entlang der Schnittebene G aus Fig. 7A. Auch in diesen Ausführungsvarianten sind die Befestigungsöffnungen 42 im jeweiligen Laufrad 4 jeweils als Sacklöcher ausgebildet. Sie weisen auch jeweils Gewinde 421 auf, in die die als Schrauben ausgebildeten Befestigungsmittel 5 zur Befestigung der jeweiligen Spurkranzsektoren 1 eingeschraubt werden. Der Unterschied zwischen den Varianten gemäß Fig. 6A und 6B einerseits und Fig. 7A und 7B andererseits liegen im Wesentlichen in der Länge der Schrauben und der Befestigungsöffnungen 42.

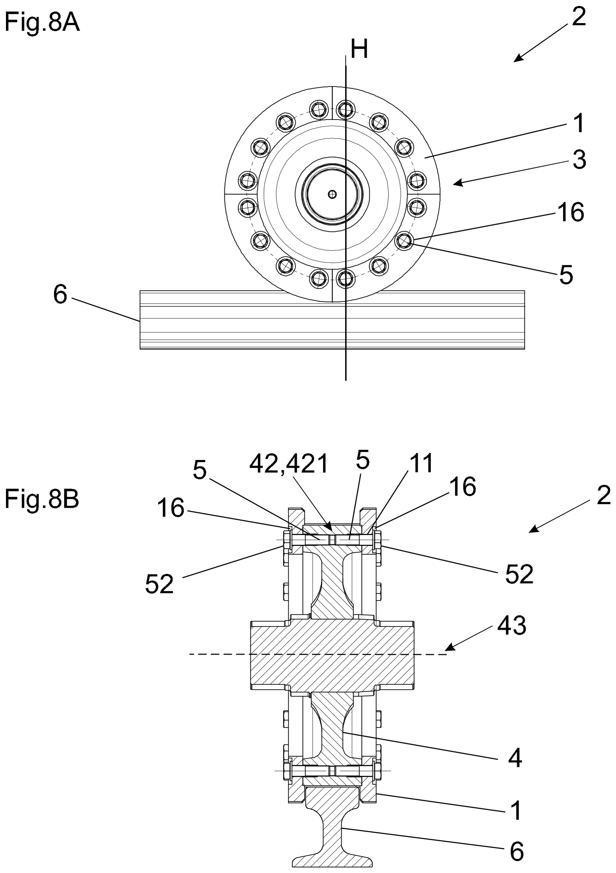

Die Fig. 8B zeigt einen Querschnitt entlang der Schnittebene H der Anordnung 2 gemäß Fig. 8A.Die Befestigungsöffnungen 42 gemäß der Fig. 8B sind im Gegensatz zu den Befestigungsöffnungen 42 der Fig. 5B durchgehend und nicht als Sackloch ausgebildet. Hier werden somit zur Befestigung der Spurkranzsektoren 1 an einander gegenüberliegenden Seiten des Laufrades 4 jeweils zwei als Befestigungsmittel 5 verwendete Schrauben von einander gegenüberliegenden Seiten in jeweils dieselbe Befestigungsöffnung 42 geschraubt, bis nur noch ein geringer Abstand zwischen ihren aufeinander zu weisenden Enden bleibt. Dadurch wird eine größere Klemmlänge erreicht und die dynamische Belastung der Befestigungsmittel 5 reduziert.

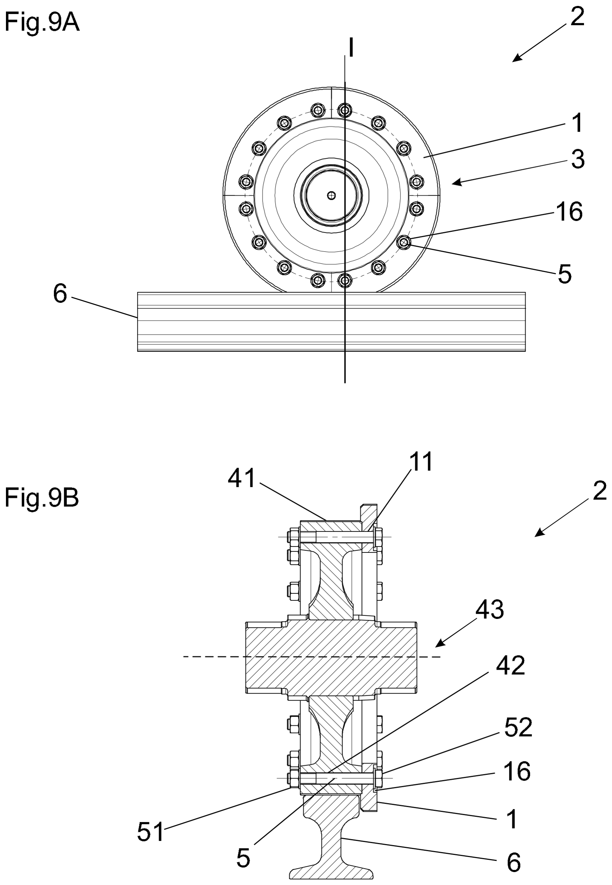

Die Ausführungsform gemäß der Fig. 9A und 9B weist vollständig durchgehende Befestigungsöffnungen 42 im Laufrad 4 ohne Gewinde 421 und Durchgangsbohrungen 11 in den jeweiligen Spurkranzsektoren 1 ohne Gewinde 111 aber mit Vertiefungen 16 auf. Fig. 9B zeigt den Schnitt entlang der Schnittebene I aus Fig. 9A.Bei dieser Variante wird die größtmögliche Klemmlänge der Befestigungsmittel 5 erzielt. Die als Schrauben ausgebildeten Befestigungsmittel 5 werden jeweils mit einer Mutter 51 verschraubt, um so die Spurkranzsektoren 1 am Laufrad 4 zu befestigen.

In allen hier gezeigten wie auch in anderen bevorzugten Varianten ist das Laufrad 4 einstückig ausgebildet, was aber nicht zwingend so sein muss. Die Lauffläche 41 des Laufrades 4 ist jedenfalls bevorzugt kreiszylindermantelförmig ausgebildet.

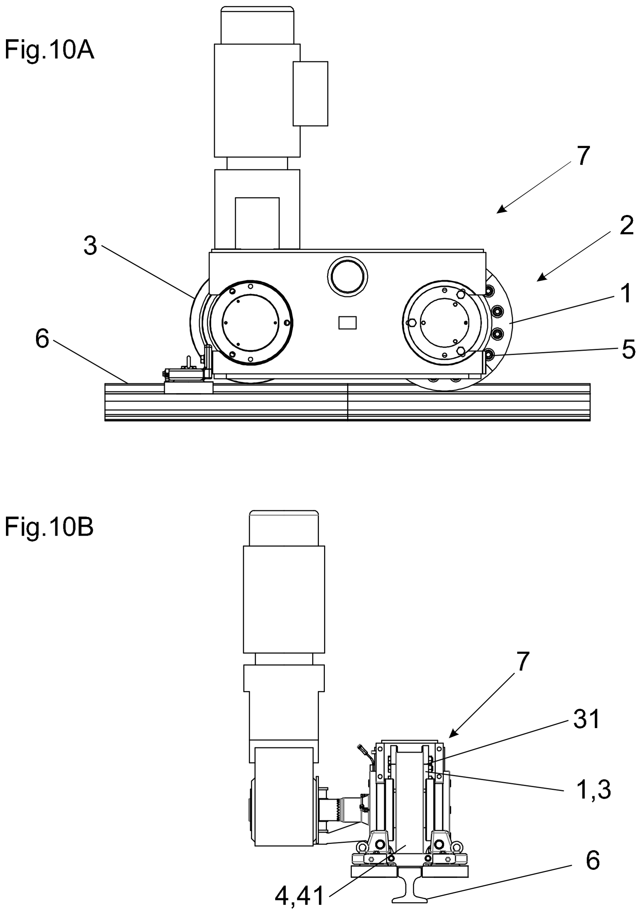

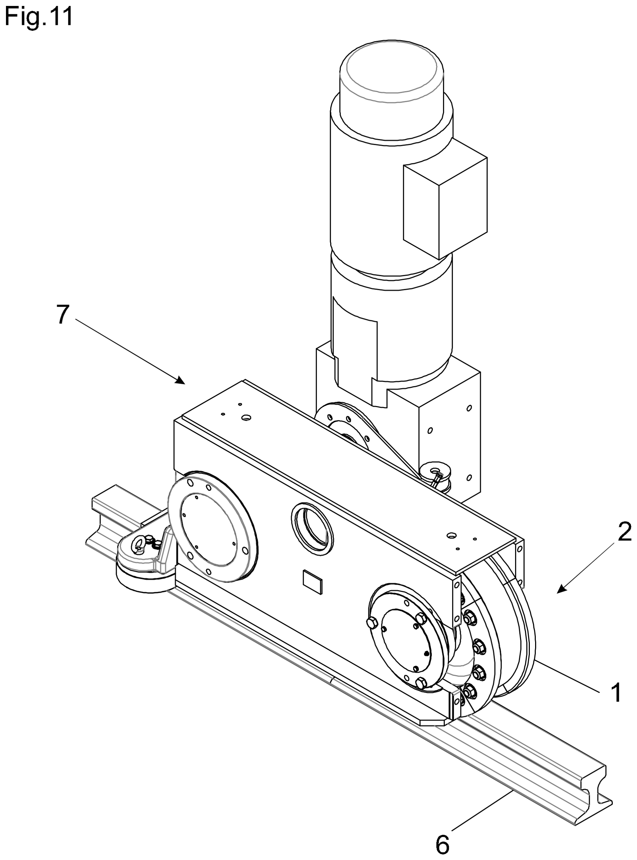

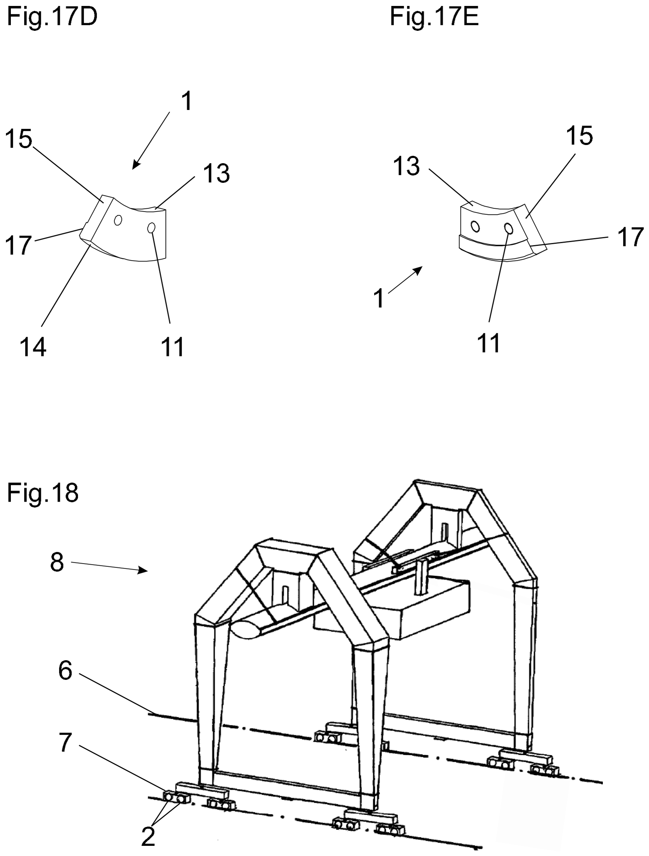

Die Fig. 10A, 10B und 11 zeigen eine Ausführungsform einer Anordnung 2 mit Laufrad 4 und Spurkranz 3, wobei die Anordnung 2 bereichsweise von einem Laufradgehäuse 7 umgeben und auf einer Schiene 6 gelagert ist. Es handelt sich dabei um ein Fahrwerk eines Kran, insbesondere Portalkrans, so wie er beispielhaft in Fig. 18 dargestellt ist.

Dadurch, dass der Spurkranz 3 wenigstens zwei, besonders bevorzugt 4, erfindungsgemäße Spurkranzsektoren 1 umfasst, können einzelne Spurkranzsektoren 1 ausgetauscht werden, ohne das Laufrad 4 ausbauen zu müssen.

Das Laufrad 4 bleibt während des Abnehmens der Spurkranzsektoren 1 vom Laufrad 4 und dem Ersetzen durch die neuen Spurkranzsektoren 1 auf der Schiene 6 gelagert. Dies vereinfacht die notwendigen Arbeiten zum Ersatz von verschlissenen Spurkränzen 3 erheblich gegenüber dem Stand der Technik.

Beim Austausch eines Spurkranzes 3 wird zumindest einer der den Spurkranz 3 bildenden Spurkranzsektoren 1 vom Laufrad 4 abgenommen und durch zumindest einen neuen Spurkranzsektor 1 ersetzt, bevor zumindest ein anderer der den Spurkranz 3 bildenden Spurkranzsektoren 1 vom Laufrad 4 abgenommen und durch zumindest einen anderen neuen Spurkranzsektor 1 ersetzt wird.

Der Spurkranz 3 umfasst in den Fig. 10A, 10B und 11 Spurkranzsektoren 1 mit einem Mittelpunktswinkel von 90°, wodurch die Zugänglichkeit der einzelnen Spurkranzsektoren 1 trotz Laufradgehäuses 7, welches die Anordnung 2 teilweise umgibt, möglich ist.

Das Laufrad 4 wird zum Abnehmen und Ersetzen des jeweiligen Spurkranzsektors 1 so gedreht, dass der jeweils abzunehmende und zu ersetzende Spurkranzsektor 1 in einem Bereich außerhalb des Laufradgehäuses 7 positioniert wird. Hierdurch ist er einfach von außen zugänglich und kann ersetzt werden.

Nach dem Ersetzen eines Spurkranzsektors 1 durch den neuen Spurkranzsektor 1 und vor dem Abnehmen des anderen Spurkranzsektors 1 wird das Laufrad 4 so gedreht, dass der neue zu ersetzende Spurkranzsektor 1 außerhalb des Laufradgehäuses 7 positioniert und damit für den Austausch gut zugänglich ist. Diese Prozedur wird so lange wiederholt, bis alle auszutauschenden Spurkranzsektoren 1 durch neue Spurkranzsektoren ersetzt sind.

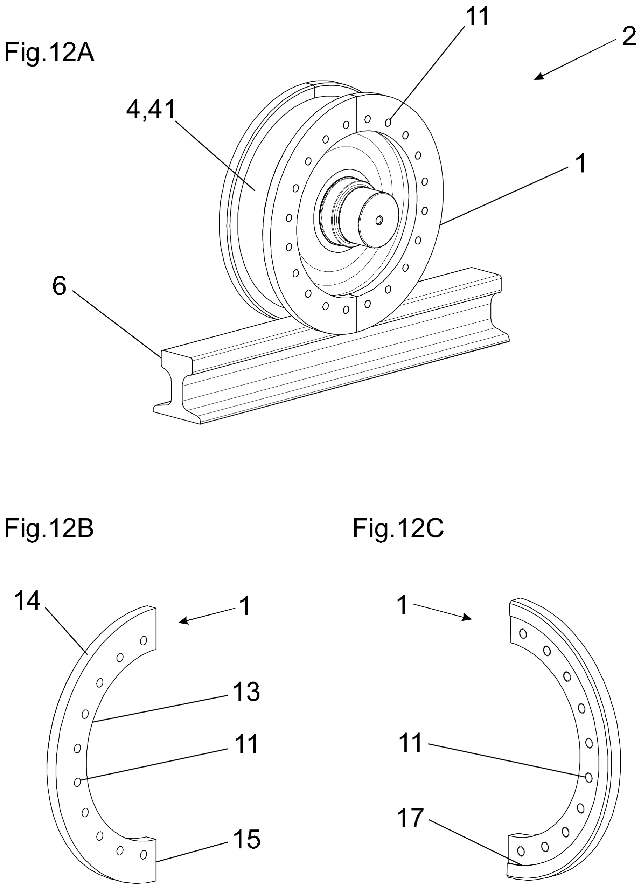

Die Figuren 12A, 13A, 14A, 15A, 16A und 17A zeigen jeweils axonometrische Darstellungen einer Anordnung 2 mit unterschiedlicher Anzahl an Spurkranzsektoren 1.

Ein Spurkranzsektor 1 weist dabei in einer Seitenansicht in diesen bevorzugten Ausgestaltungsformen die Form eines Kreisringsektors auf.

Diese Kreisringsektoren bzw. Spurkranzsektoren 1 werden jeweils seitlich durch wenigstens zwei seitliche Ränder 15 und radial durch einen inneren Rand 13 und einen äußeren Rand 14 begrenzt, sodass zwischen den wenigstens zwei seitlichen Rändern 15 ein Mittelpunktswinkel aufgespannt wird.

Als Referenz dient hierzu ein Mittelpunkt eines imaginären Kreisrings, wobei der Kreisringsektor 1 eine Teilmenge des Kreisringes darstellt.

Die Fig. 12B und 12C zeigen dabei einen Spurkranzsektor 1 aus Fig. 12A mit einem Mittelpunktswinkel von 180° und zehn Durchgangsöffnungen 11, die in einem gleichmäßigen Abstand zueinander an dem Spurkranzsektor 1 angeordnet sind.

Die randlich angeordneten Durchgangsöffnungen 11 sind zudem näher an dem jeweils benachbarten seitlichen Rand 15 des Spurkranzsektors 1 angeordnet als an der dazu benachbarten Durchgangsöffnung 11.

Die Fig. 12B und 12C unterscheiden sich dahingehend, dass der Spurkranzsektor 1 um 180° um die eigene Achse gedreht ist, bzw. um eine horizontale Achse gespiegelt dargestellt ist.

Auf der Seitenfläche des Spurkranzsektors 1 in der Fig. 12C ist zudem die Anlageschulter 17 zur bevorzugt formschlüssigen Anlage an einer Lauffläche 41 des Laufrades 4 ersichtlich. Diese letztgenannten Ausgestaltungsmerkmale sind auch bei den nachfolgend beschriebenen Beispielen ausgebildet, ohne dass dies noch einmal explizit wiederholt wird.

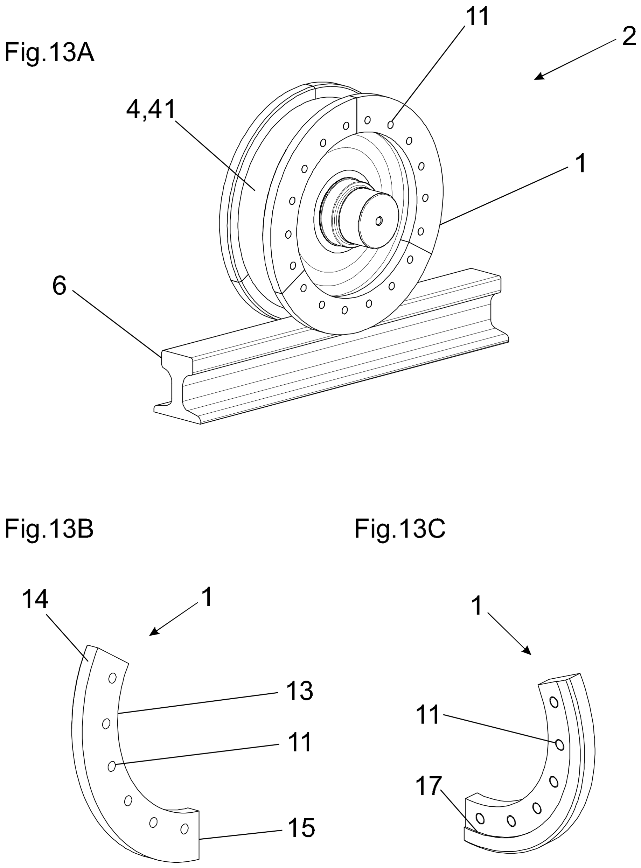

Die Fig. 13B und 13C zeigen dabei einen Spurkranzsektor 1 aus Fig. 13A mit einem Mittelpunktswinkel von 120° und sechs Durchgangsöffnungen 11, die in einem gleichmäßigen Abstand zueinander an dem Spurkranzsektor 1 angeordnet sind.

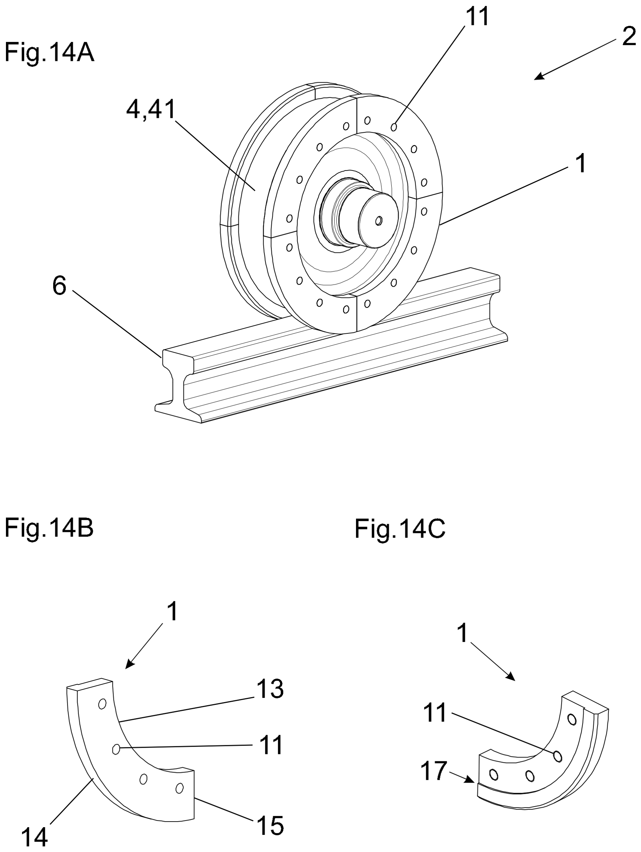

Die Fig. 14B und 14C zeigen dabei einen Spurkranzsektor 1 aus Fig. 14A mit einem Mittelpunktswinkel von 90° und vier Durchgangsöffnungen 11, die in einem gleichmäßigen Abstand zueinander an dem Spurkranzsektor 1 angeordnet sind.

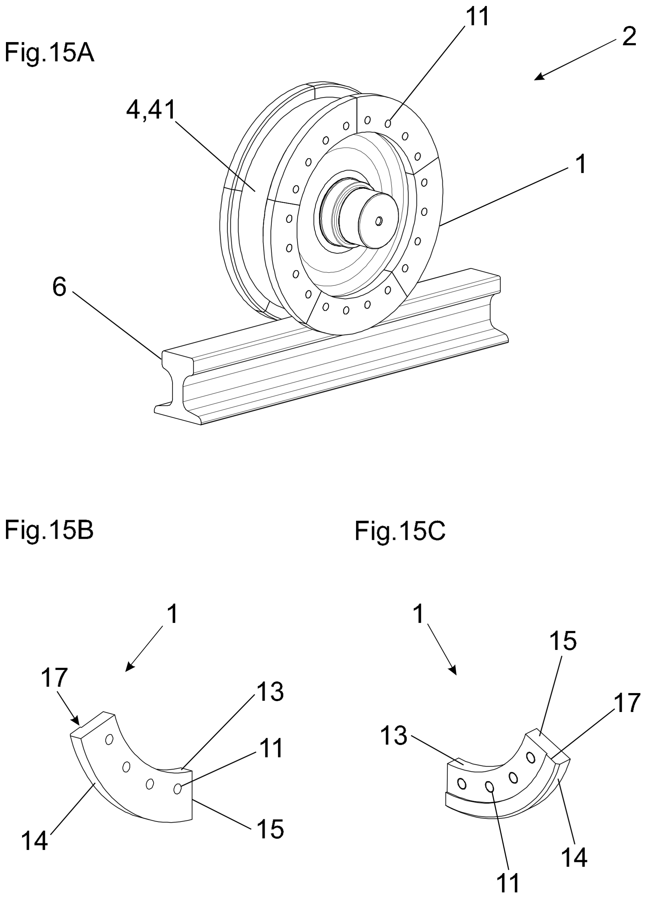

Die Fig. 15B und 15C zeigen dabei einen Spurkranzsektor 1 aus Fig. 15A mit einem Mittelpunktswinkel von 72° und vier Durchgangsöffnungen 11, die in einem gleichmäßigen Abstand zueinander an dem Spurkranzsektor 1 angeordnet sind.

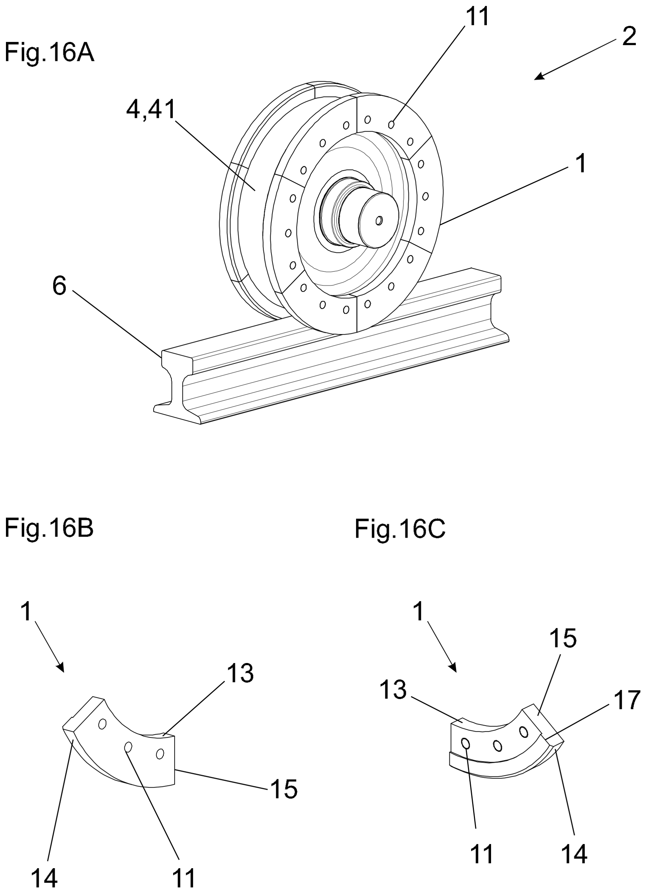

Die Fig. 16B und 16C zeigen dabei einen Spurkranzsektor 1 aus Fig. 16A mit einem Mittelpunktswinkel von 60° und drei Durchgangsöffnungen 11, die in einem gleichmäßigen Abstand zueinander an dem Spurkranzsektor 1 angeordnet sind.

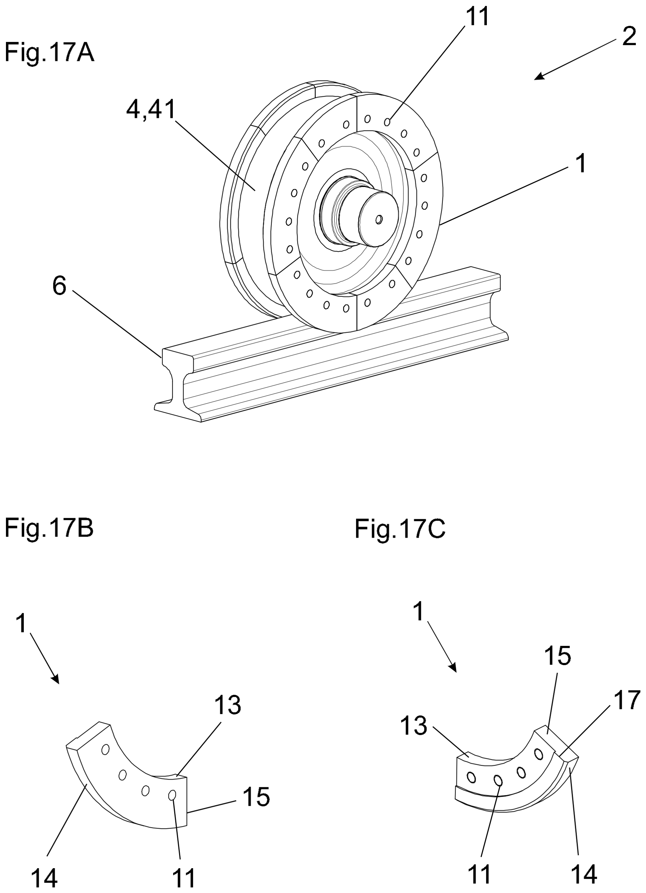

Die Fig. 17A zeigt eine Anordnung 2, wobei der Spurkranz 3 aus zwei unterschiedlichen Arten von Spurkranzsektoren 1 gebildet wird, die sich durch den jeweiligen Mittelpunktswinkel und die Anzahl an Durchgangsöffnungen 11 voneinander unterscheiden.

In Fig. 17B und 17C wird die erste Art an Spurkranzsektor 1 gemäß der Fig. 17A dargestellt. Dieser Spurkranzsektor 1 weist einen ersten Mittelpunktswinkel und vier Durchgangsöffnungen 11 auf.

In Fig. 17D und 17E wird die zweite Art an Spurkranzsektor 1 gemäß der Fig. 17A dargestellt. Dieser Spurkranzsektor 1 weist einen zweiten, vom ersten Mittelpunktswinkel verschiedenen Mittelpunktswinkel und zwei Durchgangsöffnungen 11 auf, wobei der erste Mittelpunktswinkel größer als der zweite Mittelpunktswinkel ist.

Generell sind auch andere Kombinationen unterschiedlicher Arten von Spurkranzsektoren 1, die einen Spurkranz 3 bilden denkbar, wobei bevorzugt jeweils vorgesehen ist, dass die Summe der Mittelpunktswinkel der einzelnen den Spurkranz 3 bildenden Spurkranzsektoren 1 360° beträgt und das Laufrad 4 der Anordnung 2 die entsprechende Anzahl an Befestigungsöffnungen 42 im entsprechenden Abstand zueinander aufweist.

Die Fig. 18 zeigt exemplarisch ein Schienenfahrzeug 8 in Form eines als Portalkran ausgebildeten Krans mit auf Schienen 6 gelagerten Fahrwerken mit Laufrädern 4, welche jeweils Teil einer erfindungsgemäßen Anordnung 2, also mit erfindungsgemäßen Spurkranzsektoren 1, sind. Die Fahrwerke können so ausgestaltet sein, wie dies in Fig. 10A, 10B und 11 exemplarisch gezeigt ist.

### L e g e n d e zu den Hinweisziffern:

- 1: Spurkranzsektor
- 11: Durchgangsöffnung
- 111: Gewinde
- 12: imaginärer Kreisbogen
- 13: innerer Rand
- 14: äußerer Rand
- 15: seitlicher Rand
- 16: Vertiefung
- 17: Anlageschulter
- 2: Anordnung
- 21: Härtebereich
- 3: Spurkranz
- 31: Übergangsbereich
- 4: Laufrad
- 41: Lauffläche
- 42: Befestigungsöffnung
- 421: Gewinde
- 43: Drehachse
- 5: Befestigungsmittel
- 51: Mutter
- 52: Kopf
- 6: Schiene
- 7: Laufradgehäuse
- 8: Schienenfahrzeug
- 9: Abstand
- 10: Abstand

## Patentansprüche

1. Spurkranzsektor (1) für einen Spurkranz (3) für ein Laufrad (4) eines Schienenfahrzeugs (8), vorzugsweise ein Kranlaufrad, **dadurch gekennzeichnet, dass** der Spurkranzsektor (1) wenigstens eine Durchgangsöffnung (11) zur Befestigung des Spurkranzsektors (1) an dem Laufrad (4) aufweist, welche den Spurkranzsektor (1) in einer Richtung orthogonal zu einer radialen Richtung des Spurkranzsektors (1) vollständig durchdringt.

2. Spurkranzsektor (1) nach dem vorhergehenden Anspruch, wobei der Spurkranzsektor (1) in einer Seitenansicht die Form eines Kreisringsektors aufweist.

3. Spurkranzsektor (1) nach einem der vorangehenden Ansprüche, wobei der Spurkranzsektor (1) sich über einen Mittelpunktswinkel von maximal 180°, bevorzugt von maximal 90°, erstreckt.

4. Spurkranzsektor (1) nach einem der vorhergehenden Ansprüche, wobei der Spurkranzsektor (1) wenigstens zwei, bevorzugt mehr als drei, Durchgangsöffnungen (11) aufweist.

5. Spurkranzsektor (1) nach einem der vorhergehenden Ansprüche, wobei der Spurkranzsektor (1) in radialer Richtung durch einen inneren Rand (13) und einen äußeren Rand (14) begrenzt ist und die wenigstens eine Durchgangsöffnung (11) näher am inneren Rand (13) als am äußeren Rand (14) des Spurkranzsektors (1) angeordnet ist.

6. Spurkranzsektor (1) nach einem der vorhergehenden Ansprüche, wobei wenigstens eine randlich angeordnete Durchgangsöffnung (11) näher an einem seitlichen Rand (15) des Spurkranzsektors (1) angeordnet ist als an der dazu benachbarten Durchgangsöffnung (11), wobei ein Abstand der randlich angeordneten Durchgangsöffnung (11) zum seitlichen Rand (15) des Spurkranzsektors (1) bevorzugt höchstens die Hälfte eines Abstandes (9) der randlich angeordneten Durchgangsöffnung (11) zur benachbarten Durchgangsöffnung (11) beträgt.

7. Spurkranzsektor (1) nach einem der vorhergehenden Ansprüche, wobei der Spurkranzsektor (1) aus Metall gefertigt ist, wobei der Spurkranzsektor (1) zumindest an einer seiner Oberflächen eine Brinellhärte von wenigstens 400, bevorzugt wenigstens 500, aufweist.

8. Anordnung (2) mit einem Laufrad (4) für ein Schienenfahrzeug (8), vorzugsweise Kranlaufrad, und zumindest einem am Laufrad (4) befestigten Spurkranz (3), wobei der Spurkranz (3) aus zumindest zwei Spurkranzsektoren (1) nach einem der vorhergehenden Ansprüche ausgebildet ist.

9. Anordnung (2) nach dem vorhergehenden Anspruch, wobei das Laufrad (4) wenigstens eine Befestigungsöffnung (42) zur Befestigung wenigstens eines der Spurkranzsektoren (1) an dem Laufrad (4), aufweist.

10. Anordnung nach dem vorangehenden Anspruch, wobei die wenigstens eine Befestigungsöffnung (42) das Laufrad (4) in einer axialen Richtung parallel zu einer bzw. der Drehachse des Laufrades (4) vollständig durchdringt.

11. Anordnung (2) nach einem der Ansprüche 8 bis 10, wobei zusätzlich wenigstens ein Befestigungsmittel (5) vorgesehen ist, wobei mit dem wenigstens einem Befestigungsmittel (5) der wenigstens eine Spurkranzsektor (1) über die wenigstens eine Durchgangsöffnung (11) des Spurkranzsektors (1) und die wenigstens eine Befestigungsöffnung (42) des Laufrades (4) an dem Laufrad (4) lösbar befestigbar oder befestigt ist.

12. Anordnung (2) nach einem der Ansprüche 8 bis 11, wobei eine bzw. die Lauffläche (41) des Laufrades (4) aus, vorzugsweise gehärtetem, Metall, vorzugsweise Stahl, gefertigt ist und/oder wobei das Laufrad (4) einstückig ausgebildet ist.

13. Anordnung (2) nach einem der Ansprüche 8 bis 12, wobei eine bzw. die Lauffläche (41) des Laufrades (4) kreiszylindermantelförmig ausgebildet ist.

14. Verfahren zum Austausch des Spurkranzes (3) einer Anordnung (2) nach einem der Ansprüche 8 bis 13, wobei zumindest einer der den Spurkranz (3) bildenden Spurkranzsektoren (1) vom Laufrad (4) abgenommen und durch zumindest einen neuen Spurkranzsektor (1) ersetzt wird, bevor zumindest ein anderer der den Spurkranz (3) bildenden Spurkranzsektoren (1) vom Laufrad (4) abgenommen und durch zumindest einen anderen neuen Spurkranzsektor (1) ersetzt wird.

15. Verfahren nach dem vorhergehenden Anspruch, wobei das Laufrad (4) während des Abnehmens der Spurkranzsektoren (1) vom Laufrad (4) und dem Ersetzen durch die neuen Spurkranzsektoren (1) auf einer Schiene (6) gelagert ist.
